# EUROPEAN PATENT APPLICATION

(11) **EP 3 575 196 A1**
(43) Date of publication of application: **04.12.2019**
(21) Application number: 18190698.3
(22) Date of filing: 24.08.2018
(51) Int. Cl.: B62J 15/00, H02S 20/00

(54) **FENDER WITH SOLAR POWER GENERATION FUNCTION**

(30) Priority: 31.05.2018 CN 201810571906
(71) Applicant: Miasole Photovoltaic Technology Co., Ltd., Beijing (CN)
(72) Inventor: Ou, Haijin, Beijing (CN); Yang, Sheng, Beijing (CN); Pan, Jianwen, Beijing (CN); Wen, Junrong, Beijing (CN)
(74) Representative: Soria Parra, Manuel

(57) **Abstract**

The present invention relates to a fender with a solar power generation function. The fender includes: a fender body. A flexible solar cell module fitting with the fender body is fixed on the fender body. The present invention not only saves space, but also effectively solves the problem that the solar cell module and its mounting accessories are easily damaged under pressure.

## Description

### TECHNICAL FIELD

The present invention relates to the field of solar energy technologies, and in particular, to a fender with a solar power generation function.

### BACKGROUND

Bicycles have been widely used as green travelling tools. In the long-term use of bicycles, they may be equipped with a power supply to meet the power consumption requirements of electronic systems such as smart bicycle-locks and alarm devices. In view of this, the solar cell is applied to a power supply system for a sharing bicycle as a suitable power supply source.

Since bicycles are often in a bumpy state, the performance of the solar cells provided thereon will be affected. Alternatively, the solar cells or the fasteners therefor are easily damaged due to the pressure of the weight on the solar cells. In the long run, the solar cells eventually fail to generate power normally.

### SUMMARY

In order to overcome the problems in the related art that the solar cells or the fasteners therefor are easily affected in performance and structure, embodiments of the present invention provide a fender with a solar power generation function. The technical solution is as follows.

According to the embodiments of the present invention, there is provided a fender with a solar power generation function, including a fender body and a flexible solar cell module, wherein the flexible solar cell module is fixed on the fender body, and a shape of the flexible solar cell module is matched with a shape of the fender body.

In an embodiment, the fender comprises a connector, the fender body comprises a cambered surface, the flexible solar cell module fits with the cambered surface and is fixed onto the cambered surface by the connector.

In an embodiment, the connector comprises a bonding member, a shape of the bonding member is matched with a shape of the cambered surface, and the flexible solar cell module is fixed to the fender body through the bonding member.

In an embodiment, the connector comprises a buckle, and the flexible solar cell module is fixed to the fender body by snapping the buckle.

In an embodiment, the fender body further comprises a lock member, and the buckle is snapped onto the lock member.

In an embodiment, the fender body has two guide grooves, the fender body has two sides along a length direction of the fender body, the two guide grooves are arranged on the two sides, each one of the two guide grooves extends along the length direction of the fender body, the flexible solar cell module are provided with two guide edges, and the flexible solar cell module is fixed to the fender body when each one of the two guide edges is inserted into each one of the two guide grooves.

In an embodiment, the fender further comprises a mounting strip, an angle is formed between a length direction of the mounting strip and a length direction of the fender body, the mounting strip has two ends and a middle portion, at least one end of the two ends is fixed to the fender body, the middle portion is higher than the fender body, a gap is formed between the middle portion and the fender body, and the flexible solar cell module is fixed to the fender body through the gap.

In an embodiment, the number of the mounting strip is multiple, a plurality of mounting strips are arranged at intervals along the length direction of the fender body.

In an embodiment, the fender body is provided with a positioning groove, the flexible solar cell module is provided at a top end thereof with a positioning clip corresponding to the positioning groove, and when the flexible solar cell module is fixed to the fender body, the positioning clip is inserted into the positioning groove.

In an embodiment, the flexible solar cell module includes a flexible substrate and a solar cell module, the solar cell module is adhered to a surface of the flexible substrate.

In an embodiment, the flexible solar cell module further includes a transparent protective layer, the transparent protective layer is laid on an upper surface of the solar cell module.

The technical solution provided by the embodiments of the present invention may include the following beneficial effects. By securing the flexible solar cell module onto the fender body, the fender not only can be easily installed and save space, but also can effectively solve the problem that the solar cell module and its mounting accessories are easily damaged under pressure.

It should be understood that both the foregoing general description and the following detailed description are exemplary and explanatory only and are not restrictive of the invention.

### BRIEF DESCRIPTION OF THE DRAWINGS

The accompanying drawings herein, which are incorporated in and constitute a part of this specification, illustrate embodiments consistent with the present invention and, together with the description, serve to explain the principles of the present invention.
Fig. 1 is a perspective diagram showing a fender installed on a bicycle according to an exemplary embodiment;
Fig. 2 is a schematic structural diagram showing a fender according to an exemplary embodiment;
Fig. 3 is a schematic diagram showing a securing manner of a fender according to an exemplary embodiment;
Fig. 4 is a schematic diagram showing a securing manner of a fender according to an exemplary embodiment;
Fig. 5 is a schematic diagram showing a securing manner of a fender according to an exemplary embodiment;
Fig. 6 is a schematic diagram showing a securing manner of a fender according to an exemplary embodiment;
Fig. 7 is a schematic diagram showing a securing manner of a fender according to an exemplary embodiment;
Fig. 8 is a schematic diagram showing a positioning manner of a fender according to an exemplary embodiment;
Fig. 9 is a schematic structural diagram of a fender according to an exemplary embodiment; and
Fig. 10 is a schematic structural diagram of a flexible solar cell module according to an exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the present invention. Instead, they are merely examples of devices and methods consistent with aspects related to the present invention as recited in the appended claims.

In the related art in which a solar cell module is used as a bicycle power source, the solar cell module may be mounted on a bicycle frame or a rear seat, thereby realizing energy conversion and supply. The installation method of the solar cell module determines that the solar panel is horizontally mounted, and for example, may be secured by plane screws, parallel rails, or adhesion. This installation method not only has a problem of large space occupation, but also, the solar panel or the fastener is easily damaged due to the pressure of the weight.

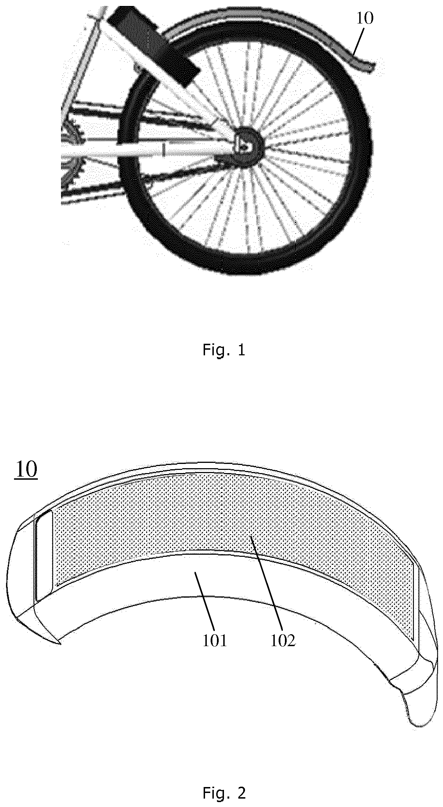

The technical solution provided by the embodiments of the present invention relates to a fender 10 having a solar power generation function, which may be applied to the bicycle provided with the fender as shown in Fig. 1. As shown in Fig. 2, the fender 10 includes a fender body 101, and the fender body 101 is fixed with a flexible solar cell module 102 fitting with the fender body 101. In the present invention, the solar cell module 102 is fitted onto the outer cambered-surface of the fender body 101.

The securing manner includes two ways: the integrated securing structure and the separated securing structure for connection. That is, the fender body 101 and the flexible solar cell module 102 may have formed an integrated structure when leaving the factory, or may be a separated structure to be connected together.

By securing the flexible solar cell module 102 onto the fender body 101, the technical solution provided by the embodiments of the present invention not only saves space, but also effectively avoids the risk that the solar cell module 102 and the its mounting accessories are damaged under pressure.

In the present exemplary embodiment, the flexible solar cell module 102 and the fender body 101 may be secured by a connector.

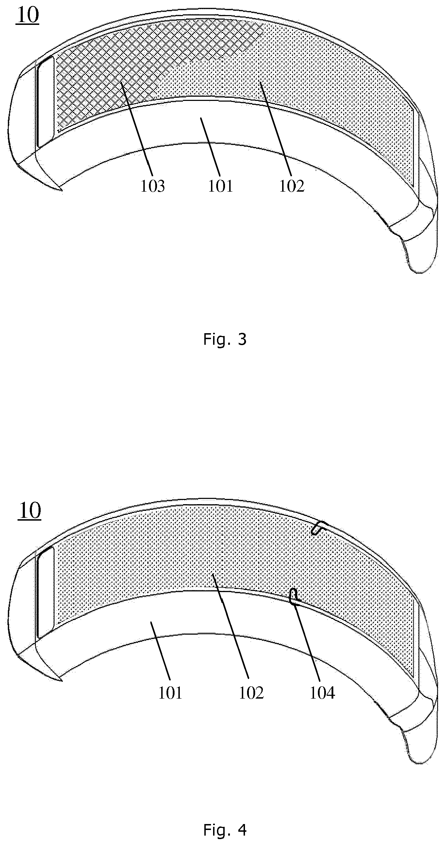

In one implementation, as shown in Fig. 3, the connector may include a bonding member 103 adhering along a cambered surface of the fender body 101. The bonding member 103 may include, for example, a glue strip or a glue layer or other sticky parts. In this case, the flexible solar cell module 102 may be fixed to the fender body 101 by the bonding member 103. That is, the flexible solar cell module 102 adheres onto the surface of the fender body 101 by the bonding member 103. Specifically, in the case where the glue strip is used as the bonding member, at least one glue strip may be disposed in any direction on the surface of the fender body 101. The number of the glue strips may be selected as long as the flexible solar cell module 102 can be tightly fixed onto the surface of the fender body 101. It should be noted that Fig. 3 only shows a partial area of the flexible solar cell module 102 in order to clearly illustrate the structure of the bonding member 103.

In another implementation, as shown in Fig. 4, the connector may include a buckle 104 by which the flexible solar cell module 102 may be snap-fitted to the fender body 101. The buckle 104 may have a separate structure such as a clip, or be integrated with the fender body 101, or be integrated with the flexible solar cell module 102.

Further, when the buckle 104 is not directly engaged on the fender body 101, the fender body 101 may further be provided with a lock member fitting with the buckle 104, and the flexible solar cell module 102 may be snapped onto the lock member of the fender body 101 through the buckle 104. For example, the lock member may be two ribs arranged along the length direction of the fender body 101, and the buckle 104 may be integrated with the flexible solar cell module 102, so that the flexible solar cell module 102 may be secured by snapping the buckle 104 to the ribs. For example, the lock member may also be a plurality of protrusions fixed on the fender body 101, and the buckle 104 may be integrated with the flexible solar cell module 102, so that the flexible solar cell module 102 may be secured by snapping the buckle 104 to the protrusions.

In the exemplary embodiment, the flexible solar cell module 102 and the fender body 101 may also be secured by their own structural design.

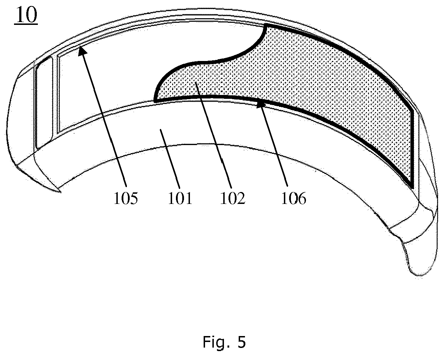

In one implementation, as shown in Fig. 5, the fender body 101 may be provided with guide grooves 105 at two sides of the fender body 101 along the length direction. The flexible solar cell module 102 may be provided with guide edges 106 at two sides of the flexible solar cell module 102. Then, the flexible solar cell module 102 may be inserted into the guide grooves 105 through the guide edges 106, so as to be fixed to the fender body 101. It should be noted that Fig. 5 only shows a partial area of the flexible solar cell module 102 in order to clearly show the structure of the guide grooves 105.

The fender body 101 may be a hollow structure. That is, the fender body 101 includes a bracket and a hollow region located inside the bracket. In this case, the guide grooves 105 may be disposed at the edges of the bracket facing the hollow region and the openings of the grooves face the hollow region. The guide edges 106 of the flexible solar cell module 102 may be inserted into the guide grooves 105 to be fixed onto the fender body 101.

Alternatively, the fender body 101 may also be a non-hollow structure. That is, the fender body 101 has an integrated and continuously distributed bracket. In this case, the guide grooves 105 may be disposed at the edge of the bracket and the openings of the grooves face the central area of the bracket. Then, the guide edges 106 of the flexible solar cell module 102 may be inserted into the guide grooves 105 to be fixed onto the fender body 101.

In this way, in the embodiment, the guide grooves 105 are disposed on both sides of the fender body 101, and the guide edges 106 are disposed on both sides of the flexible solar cell module 102, so that the flexible solar cell module 102 may be inserted into the fender body 101 along the positions defined by the guide grooves 105 and may bend in the direction guided by the guide grooves 105. This can achieve cambered surface mounting of the flexible solar cell module 102, which has good fit with the cambered surface of the fender body 101. Therefore, it may effectively save space occupation area. In addition, the flexible solar panel assembly 102 of this embodiment adopts a push-pull mounting method, which not only can be easily operated, but also can avoid the risk of the solar cell module 102 and its mounting accessories being damaged under pressure.

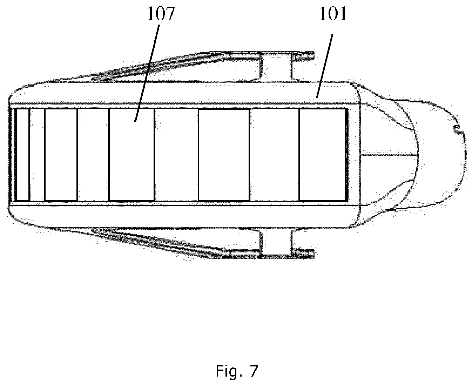

In another embodiment, as shown in Fig. 7, the fender body 101 may be fixed with a mounting strip 107, an angle is formed between the mounting strip 107 and a length direction of the fender body 101, and at least one end of the mounting strip 107 is fixed on the fender body 101. A gap is kept between a middle portion of the mounting strip 107 and the fender body 101, the flexible solar cell module 102 may be fixed to the fender body 101 through the gap.

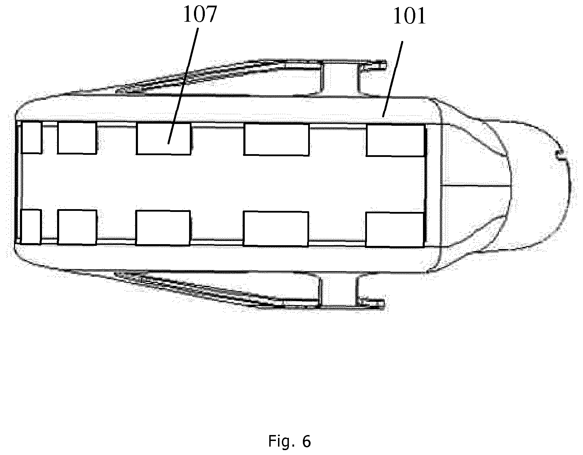

As shown in Fig. 6, the mounting strip 107 may be a long strip or a short strip as long as it may hold the flexible solar cell module 102 and guide the flexible solar cell module 102 on the fender.

When one end of the mounting strip 107 is fixed on the fender body 101, the mounting strip 107 may be separately disposed along both side edges of the fender body 101. Alternatively, as shown in Fig. 7, when both ends of the mounting strip 107 are fixed to the fender body 101, the mounting strip 107 may be connected to both side edges of the fender body 101. It should be noted that the extending direction of the mounting strip 107 and the length direction of the fender body 101 may be perpendicular to each other or at an angle with respect to each other, which is not limited in this embodiment.

In this embodiment, the number of the mounting strip 107 is multiple, a plurality of mounting strips 107, are arranged at intervals along the length direction of the fender body 101. That is, two adjacent mounting strips 107 are spaced apart by a certain distance. Thereby a plurality of mounting strips 107 distributed along the cambered surface are formed. The plurality of mounting strips 107 may be disposed in parallel or non-parallel with each other, which is not specifically limited in this embodiment.

Optionally, the mounting strip 107 may have a planar structure. In this case, the width of the mounting strip 107 having the planar structure may be relatively small to accommodate the transition of the cambered surface of the fender body 101.

Optionally, the mounting strip 107 may also have a micro-arc surface structure, i.e., a cambered surface structure with a small curvature. In this case, the curvature of the micro-arc surface structure may be matched with the cambered surface of the fender body 101 to accommodate the transition of the cambered surface of the fender body 101.

In this way, in the present embodiment, a mounting strip 107 is provided on the fender body 101 so that the flexible solar cell module 102 may be bent forward along the gap between the fender body and the mounting strip 107. The interval of the mounting strip 107 limits the flexible solar cell module onto the fender while guiding the curvature of the flexible solar cell module to be attached to the fender.

In this way, the cambered surface mounting of the flexible solar cell module 102 may be realized, which has a good fit with the cambered surface of the fender body 101, and thus may effectively save space occupation area. In addition, the flexible solar panel assembly 102 of this embodiment adopts a push-pull mounting method, which not only can be easily operated, but also can avoid the risk of the solar cell module 102 and its mounting accessories being damaged under pressure.

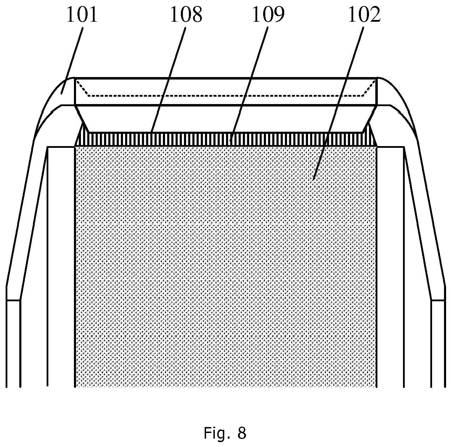

Based on the above embodiments, as shown in Fig. 8, the fender body 101 may further be provided with a positioning groove 108. At the top end of the flexible solar cell module 102, a positioning clip 109 corresponding to the positioning groove 108 may be disposed. When the flexible solar cell module 102 is fixed to the fender body 101, the positioning clip 109 may be inserted into the positioning groove 108 to ensure a relative positional relationship between the two. Fig. 8 is a schematic cross-sectional view of the fender in the embodiment of Fig. 5. To facilitate the illustration of the positioning groove 108, the side walls of the grooves of the fender body 101 are not shown.

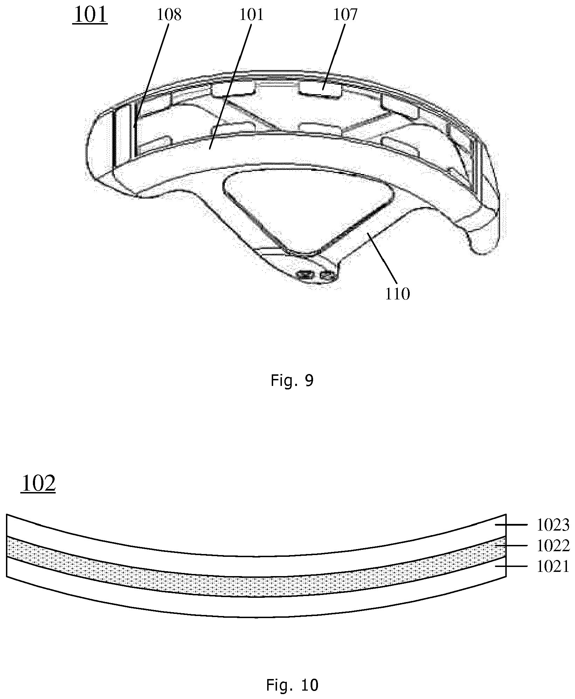

In an exemplary embodiment, as shown in Fig. 9, the fender body 101 may further include a support portion 110, which may be fixed to the cambered fender body 101, for securing the fender body 101 to the body of the bicycle. The support portion 110 may be connected to the frame of the cambered bracket. Then, the fender body 101 may be mounted on the wheel axle of the bicycle through the support portion 110. Alternatively, the support portion 110 may be connected to the end of the cambered bracket, and the fender body 101 may be mounted by the support portion 110 on the pillar below the seat of the bicycle. It should be noted that the support portion 110 and the fender body 101 may have an integrated structure, and the two may be simultaneously prepared by an integrated molding process such as a molding process, which not only can simplify the process, but also can exhibit good mechanical stability with the integrated structure.

In the present exemplary embodiment, as shown in Fig. 10, the flexible solar panel 102 may include:
a flexible substrate 1021;
a solar cell module 1022 attached to a surface of the flexible substrate 1021 and including a plurality of narrow strip-shaped rigid solar cell modules or flexible solar cell modules; and
a transparent protective layer 1023 laid on an upper surface of the solar cell module 1022, i.e., a surface at the side of the solar cell module 1022 facing away from the flexible substrate 1021.

In this way, in the embodiment, the solar cell module 1022 is disposed between the flexible substrate 1021 and the transparent protective layer 1023, thereby providing a protective effect for the solar cell module 1022. When a plurality of narrow strip-shaped rigid solar cell modules are used to form the flexible solar panel 102, it has good adaptability to the conventional crystalline silicon solar cell process, and thus the process maturity is high. When the flexible solar panel 102 is formed by using the flexible solar cell module, since the solar cell module in the flexible solar cell module is also a flexible material and has good bending performance, the seamless connection of the flexible solar panel 102 may be realized, and can be adapted to a larger cambered curvature.

Other embodiments of the invention will be apparent to those skilled in the art from consideration of the specification and practice of the invention disclosed here. This application is intended to cover any variations, uses, or adaptations of the invention following the general principles thereof and including such departures from the present invention as come within known or customary practice in the art. It is intended that the specification and examples be considered as exemplary only, with a true scope of the invention being indicated by the following claims.

It will be appreciated that the present invention is not limited to the exact construction that has been described above and illustrated in the accompanying drawings, and that various modifications and changes may be made without departing from the scope thereof. It is intended that the scope of the invention only be limited by the appended claims.

## Claims

1. A fender with a solar power generation function, comprising a fender body (101) and a flexible solar cell module (102), wherein the flexible solar cell module (102) is fixed on the fender body (101), and a shape of the flexible solar cell module (102) is matched with a shape of the fender body (101).

2. The fender with a solar power generation function according to claim 1, wherein the fender comprises a connector, the fender body (101) comprises a cambered surface, the flexible solar cell module (102) fits with the cambered surface and is fixed onto the cambered surface by the connector.

3. The fender with a solar power generation function according to claim 2, wherein the connector comprises a bonding member (103), a shape of the bonding member (103) is matched with a shape of the cambered surface, and the flexible solar cell module (102) is fixed to the fender body (101) through the bonding member (103).

4. The fender with a solar power generation function according to claim 2, wherein the connector comprises a buckle (104), and the flexible solar cell module (102) is fixed to the fender body (101) by snapping the buckle (104).

5. The fender with a solar power generation function according to claim 4, wherein the fender body (101) further comprises a lock member, and the buckle (104) is snapped onto the lock member.

6. The fender with a solar power generation function according to claim 1, wherein the fender body (101) has two guide grooves (105), the fender body (101) has two sides along a length direction of the fender body (101), the two guide grooves (105) are arranged on the two sides, each one of the two guide grooves (105) extends along the length direction of the fender body (101), the flexible solar cell module (102) are provided with two guide edges, and the flexible solar cell module (102) is fixed to the fender body (101) when each one of the two guide edges is inserted into each one of the two guide grooves (105).

7. The fender with a solar power generation function according to claim 1, wherein the fender further comprises a mounting strip (107), an angle is formed between a length direction of the mounting strip (107) and a length direction of the fender body (101), the mounting strip (107) has two ends and a middle portion, at least one end of the two ends is fixed to the fender body (101), the middle portion is higher than the fender body (101), a gap is formed between the middle portion and the fender body (101), and the flexible solar cell module (102) is fixed to the fender body (101) through the gap.

8. The fender with a solar power generation function according to claim 7, wherein the number of the mounting strip (107) is multiple, a plurality of mounting strips (107) are arranged at intervals along the length direction of the fender body (101) .

9. The fender with a solar power generation function according to any one of claims 6-8, wherein the fender body (101) is provided with a positioning groove (108), a top end of the flexible solar cell module (102) is provided with a positioning clip (109), the positioning clip (109) is matched with the positioning groove (108), and the positioning clip (109) is inserted into the positioning groove (108) when the flexible solar cell module (102) is fixed to the fender body (101).

10. The fender with a solar power generation function according to any one of claims 1-8, wherein the flexible solar cell module (102) comprises a flexible substrate (1021) and a solar cell module (1022), the solar cell module (1022) is adhered to a surface of the flexible substrate (1021).

11. The fender with a solar power generation function according to claim 10, wherein the flexible solar cell module (102) further comprises:
a transparent protective layer (1023) laid on an upper surface of the solar cell module (1022).
